# EUROPEAN PATENT SPECIFICATION

(11) **EP 1 959 381 B1**
(45) Date of publication and mention of the grant of the patent: **14.05.2014**
(21) Application number: 08156866.9
(22) Date of filing: 14.12.2005
(51) Int. Cl.: G06Q 10/00

(54) **Method and apparatus for generating a new event directly from a document**
Verfahren und Vorrichtung zur Erzeugung eines neuen Ereignisses direkt aus einem Dokument
Procédé et appareil de génération d'un nouvel événement directement à partir d'un document

(43) Date of publication of application: 20.08.2008
(62) Divisional of application: 05112129.1
(73) Proprietor: BlackBerry Limited, Waterloo, ON N2K 0A7 (CA)
(72) Inventor: Vanden Heuvel, David, Ottawa, Ontario K2G 5J7 (CA); May, Darrell Reginald, Waterloo Ontario N2V 2K6 (CA); Hardy, Michael Thomas, Waterloo Ontario N2T 2J8 (CA); Luu, Lap, Markham Ontario L6C 2X7 (CA)
(74) Representative: Moore, Barry

(56) References cited:
- EP-A- 1 109 121
- US-B1- 6 505 167
- PATENT ABSTRACTS OF JAPAN vol. 1999, no. 14, 22 December 1999 (1999-12-22) & JP 11 259568 A (OMRON CORP), 24 September 1999 (1999-09-24)
- SMITH M A ET AL ASSOCIATION FOR COMPUTING MACHINERY: "VISUALIZATION COMPONENTS FOR PERSISTENT CONVERSATIONS" CHI 2001 CONFERENCE PROCEEDINGS. CONFERENCE ON HUMAN FACTORS IN COMPUTING SYSTEMS. SEATTLE, WA, MARCH 31 - APRIL 5, 2001, CHI CONFERENCE PROCEEDINGS. HUMAN FACTORS IN COMPUTING SYSTEMS, NEW YORK, NY : IEEE, US, 31 March 2001 (2001-03-31), pages 136-143, XP002301011 ISBN: 1-58113-327-8

## Description

The application relates to the field of communications and more particularly to an apparatus for and method of generating a new event from a document.

As will be understood by those in the art, a user can enter text into an email in plain text and certain recognizable elements or patterns of the plain text can be translated or displayed using hypertext markup language (html) hyperlinks for added functionality. For example, when an email address, a universal resource locator (URL) or a phone number is entered into an email, a hyperlink can be generated. For example, a typed email address could appear in html as:
<A HREF="mailto:john.doe@testsite.com">john.doe@testsite.com</A>

The hyperlink usually appears as underlined text in a contrasting colour. When the email is displayed, the hyperlink can be used to invoke an application. In the above example, if john.doe@testsite.com is selected by the recipient, a new email message could be generated and john.doe@testsite.com would be inserted into the "TO:" field of the new email message. Similarly, if a hyperlinked URL is selected by a user, a browser application is automatically opened and the page identified by the URL is displayed. In the case of a phone number, a dialing application is invoked and the number is dialed.

As those skilled in the art will appreciate, many times, a user will receive a meeting invitation in the form of an email rather than a formal meeting request created through a calendar application like Microsoft® Office Outlook®. Alternately, many times a discussion occurs via an email thread which ultimately results in a meeting to resolve outstanding issues. In either case, if the user wishes to create an event based on the originating email, the user must open an application and create the event by manually entering the event details, or cutting and pasting from the originating email thread. Although this works adequately, it would be preferable if an event could be easily generated in an application directly from the originating email.

US6505167 discloses an automated service for messaging and scheduling, in which a message to analyze is determined: the probability that the user would like to review a calendar or to schedule an appointment is determined, based on information in the message, the message and options are selected based on a scheduling probability.

In one aspect the invention provides a method of creating a new event in a network communications system, according to claim 1.

In a preferred example there is provided an event providing apparatus for use in a network communications system, said apparatus comprising: a storage device for storing information; a detector module communicating with said storage device for receiving said information, said detector module adapted to detect a condition that at least a portion of said information could be mapped to an event; and a prompter module communicating with said detector module for automatically providing a user prompt related to said event upon detection by said detector module of said condition.

The apparatus may further comprise a mapper module for communicating with said storage device and said prompter module being arranged to map said at least a portion of said information to said event in response to a user interaction with said user prompt.

The detector module may further comprise a lexical analyzer for communicating with a parser and a symbol table.

The event may comprise a calendar event or a task event.

In one embodiment the detector module is a date/time detector module and the apparatus is further adapted to: identify date and time entries in said information; and provide a hyperlink for each of said identified date and time entries.

The date/time detector module may be further adapted to, upon selection by a user of said hyperlink, create said event and/or provide the event to the user.

The information may comprise an email, a peer-to-peer personal identification number (PIN) message, a short message service (SMS) message, a multimedia messaging service (MMS) message, Instant Message, a web page or a word processing document.

The apparatus may further comprise a lookup table for identifying a first type of said date and time entries, wherein said date/time detector module is arranged to identify said first type of said date and time entries, and wherein said first type of said date and time entries comprise a complete date and time format.

The date/time detector module may be arranged to identify a second type of said date and time entries, wherein said second type of said date and time entries comprises an incomplete date and time format or a relative date and time expression.

The relative date and time expression may comprise today, tomorrow, yesterday, morning, noon, afternoon, evening or night.

In another embodiment of the invention, said detector module is a thread detector module, said document is an email message, and said thread detector module is adapted to: identify a thread in said email message; and if a defined threshold is exceeded in said identified thread, prompts a user to create said event.

The defined threshold may be a number of responses received in said thread or a length of time that said thread has been active.

The network communications system may comprise a server, and said apparatus may be resident in said server.

The network communications system may comprise a wireless device, and said apparatus may be resident in said wireless device.

The information may be an email message, said new event having a notes section, and said mapping compriseing inserting a link to said email message in the notes section of said event.

The link may be MIME reference ID associated with said email message.

The event is preferably provided in a wireless device.

In another preferred aspect there is provided a method of creating a new event in an apparatus for use in a network communications system, the method comprising: storing a document in a storage device; receiving said document from said storage device into a detector module; analyzing said document; and based on identified information in said document creating said new event.

In the method said document may comprise an email, a peer-to-peer personal identification number (PIN) message, short message service (SMS) message, multimedia messaging service (MMS) message, Instant Message, web page or word processing document.

The detector module is preferably a date/time detector module, and said step of analyzing comprises searching in a lookup table to identify a first type of date and time entries, said first type of date and time entries comprising a complete date and time format.

In one example of the method said detector module is a date/time detector module, and said step of analyzing comprises processing in a lexical analyzer and a parser to identify a second type of date and time entries, said second type of date and time entries comprising an incomplete data and time format or a relative date and time expression.

The new event preferably comprises a calendar event or a task.

The step of creating preferably comprises generating a hyperlink for each of said identified first type of date and time entries and each of said identified second type of date time entries; upon selection of said hyperlink by a user, presenting the user a choice of event type to be created; upon selection of said choice of event type by the user, opening an application capable of creating said new event of said choice of event type; and mapping specified fields in said document to specified fields in said new event.

The specified fields in said document may comprise subject, to, from and/or body.

The specified fields in said new event may comprise subject, attendees and/or event notes.

In a preferred method said detector module is a thread detector module, said document is an email message, and wherein said step of analyzing comprises identifying a thread in said email message. The step of creating then preferably comprises: determining if a defined threshold contained in said thread has been exceeded; and if said defined threshold has been exceeded, prompting a user to create said new event.

Preferably said prompting comprises presenting a user with a menu and, upon selection of an entry in said menu by said user, mapping specified fields in said message to specified fields in said new event.

The defined threshold is preferably a number of responses received in said thread or a length of time that said thread has been active.

In a preferred method said network communications system is a wireless network, and said method is carried out in a server communicating to said wireless network.

In a preferred method said network communications system is a wireless network, and said method is carried out in a wireless device.

In a preferred method said new event has a notes section, and said creating comprising inserting a link to said document in the notes section of said new event.

In a preferred method said document is an email message, and said link is a MIME reference ID associated with said email message.

There is also provided a computer program product for creating a new event in an apparatus for use in a network communications system, the computer program product comprising a computer readable medium embodying code means executable by a computer device, system or apparatus for implementing the steps of any of the methods described above.

There is also provided a network communication system comprising a plurality of apparatuses as described above.

### BRIEF DESCRIPTION OF THE DRAWINGS

A better understanding of the present application will be obtained by considering the detailed description below, with reference to the following drawings in which:
Figure 1 depicts a sample user interface through which a new event can be created;
Figure 2 depicts the typical mapping pattern from an email to a calendar event;
Figure 3 depicts the system configuration used to filter a document;
Figure 4 depicts the interaction of a lexical analyzer, parser and symbol table;
Figure 5 depicts the process of generating a representation of an event using the constructs of Figure 4; and
Figure 6 depicts a wireless network supporting email.

### DESCRIPTION OF PREFERRED EMBODIMENTS

In order to overcome the limitations of the current state of the art there is provided in the present application an apparatus for and method of generating a new event directly from a document. The new event could be a calendar event or task for example, but other types of event are also considered to be in the scope of the present application. The document could be an email or webpage for example, but other types of document are also considered to be in the scope of the present application.

In one example, the time and date of the event contained in an email is automatically recognized and displayed to the user in the style and function of an html hyperlink. Selecting the time and date hyperlink generates a menu selection, offering a user the ability to create a new event into which the date/time information will be inserted, along with other information extracted from the email. For example, the subject of the event is extracted from the subject of the email, while the event attendees are taken from the "TO", "CC" and "BCC" fields. Specific date/time information in an email is correlated to a known date/time format in a lookup table and then inserted into the new event. Relative terms like "tomorrow", "today" or days of the week (ie. Monday, Tuesday, Wednesday, etc.) are hyperlinked as well. Using a date/time detector module, relative terms could be translated into specific date/time entries which are inserted into the new event. In one embodiment, the date/time detector module comprises a lexical analyzer and parser to correlate words relating to time and date, to a specific date and time that can be used and recognized by an application, such as a calendar application or tasks application. In an alternate embodiment, an email thread is analyzed by a thread detector module and, if the number of replies in the email thread exceeds a defined threshold, the user is prompted to create an event via a menu selection. Similar to the first embodiment, if the user chooses to create an event, pertinent information such as subject and atttendees is extracted from the email and inserted into the newly created event. An additional feature relative to both of the above embodiments, provides for a link to be inserted into the event which can be used to access the complete email from which the event was created.

In accordance with a first aspect of the present application there is provided a document filtering apparatus for use in a network communications system, said apparatus comprising: (a) a storage device for storing a document; and (b) a detector module communicating with said storage device for receiving said document, said detector module mapping information contained in said document to a new event.

In one example, the detector module is a date/time detector module, wherein prior to said mapping, said date/time detector module: (i) identifies date and time entries in said document; and (ii) creates a hyperlink for each of said identified date and time entries.

In another example, the detector module is a thread detector module, said document is an email message, and wherein prior to said mapping, said thread detector module: (i) identifies a thread in said email message; and (ii) if a defined threshold is exceeded, prompts a user to create said new event.

In accordance with a second aspect of the present application, there is provided in a network communications system, a method of creating a new event comprising: (a) storing a document in a storage device; (b) receiving said document from said storage device into a detector module; (c) analyzing said document; and (d) based on identified information in said document creating said new event.

Preferably, the step of creating a new event comprises; (a) generating a hyperlink for each of said identified first type of date and time entries and each of said identified second type of date time entries; (b) upon selection of said hyperlink by a user, presenting the user a choice of event type to be created; (c) upon selection of said choice of event type by the user, opening an application capable of creating said new event of said choice of event type; and (d) mapping specified fields in said document to specified fields in said new event.

The advantage of the method and apparatus disclosed in the present application is now readily apparent. When a user receives a document which has date/time information contained therein or an email thread which exceeds a defined threshold, a new event can easily be generated through date/time hyperlinks in the document or through a menu prompt arising from the email thread analysis. In either case, information contained in the document or email thread is readily mapped to the newly created calendar event or task.

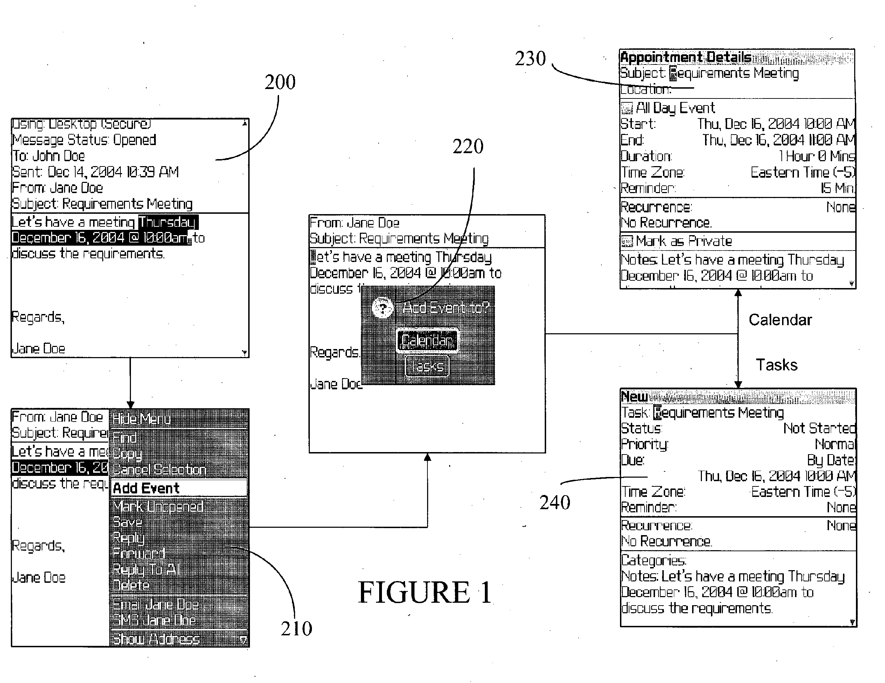

Figure 1 depicts a sample user interface through which an event can be created in accordance with a first example. As shown in the drawing, a user receives document 200 and selects the highlighted date in the body of document 200. It should be understood by those skilled in the art that the document 200 could be an email message, a peer-to-peer personal identification number (PIN) message, short message service (SMS) message, multimedia messaging service (MMS) message, Instant Message, or the like and all such messages or documents, including web pages and word processing documents, are meant to be included within the scope of the application. A menu 210 generated from which the user selects "add event". The user is then prompted with a further menu 220 which asks whether they want to define a new calendar event or task for example but other event types are possible. If a calendar event is selected then calendar event screen 230 is generated and the information contained in document 200 is mapped to the various fields contained in calendar event screen 230. Alternately, if a task is selected then task screen 240 is generated and the information contained in document 200 is mapped to the various fields contained in task screen 240.

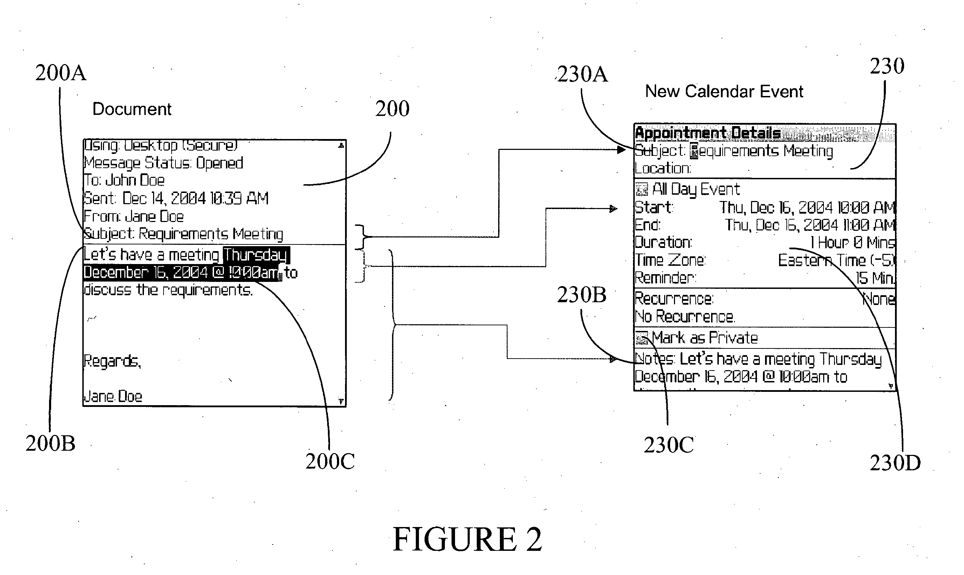

Figure 2 depicts the typical mapping pattern from document 200 to a new calendar event. As can been seen in the drawing, the subject 230A of the new calendar event is taken from the subject 200A of document 200. Meeting attendees (not shown) of the new calendar event are taken from the "To:" and "From:" lists of document 200 (CC list could be optional). Event Notes 230B are copied from the body 200B of document 200. Instead of simply copying body 200B of document 200 into Notes 230B, it is possible to insert an identifier into Notes 230B through which the body 200B of document 200 could be ascertained. This identifier could for example be a reference identifier, which uniquely references an email. One advantage of inserting a reference identifier into Notes 230B instead of inserting body 200B occurs in wireless messaging environments. In such an environment, it is beneficial to limit the amount of bandwidth used to communicate messages. If a reference identifier can be communicated wirelessly, instead of the actual body 200B of the document 200, bandwidth can be saved, saving a user money and wireless device battery power. The meeting privacy setting 230C could be determined by looking up the Sender in the address book. If the Sender is categorized as a personal (as opposed to business) contact, the calendar event privacy setting 230C could be marked as private.

With respect to the date and time entry for the calendar event, the date and time information is taken from the highlighted field 200C and inserted into time and date field 230D. Where actual times and dates are clearly indicated in document 200, recognition is relatively straightforward. It is simply a matter of using a lookup table to match the format of the given date or time, extract the required date or time information, and then insert the extracted information into the calendar event. For example, typical date and time formats contained in document 200 may include:

| Date Formats | Time Formats |
|---|---|
| MM/DD/YYYY | hh:mm [24 hour format] |
| MM/DD/YY | hh:mm AM or PM (12 hour format) |
| YYYY/MM/DD | hh:mmTZD (Time Zone Designator) |
| dd Month YYYY | hh o'clock |
| Month dd YYYY | |

If only YY is given for the year, the initial two digits are inferred from a "reference date", to be discussed below. As well, other valid separators which are recognized besides a backslash or colon include a comma, period, dash or space. Similarly, the following days of the week and month format are recognized:

| Days of the Week Formats | Month Formats | |
|---|---|---|
| Monday, Mon, Mo | January, Jan | August, Aug |
| Tuesday, Tues, Tue, Tu | February, Feb | September, Sept, Sep |
| Wednesday, Wed, We | March, Mar | October, Oct |
| Thursday, Thurs, Thu, Th | April, Apr | November, Nov |
| Friday, Fri, Fr | May | December, Dec |
| Saturday, Sat, Sa | June, Jun | |
| Sunday, Sunday, Su | July, Jul | |

The above formats are only meant to serve as examples of the possible date/time formats which could be matched to entries in the lookup table integral to the present embodiment. As will be appreciated, other expressions/abbreviations and their translations to other languages could also be included in the lookup table and are meant to be included within the scope of the present application. It is also possible to use a scheduling mechanism to select the date and time most proximate to the date and time inferred from the document, where each meeting attendee is available.

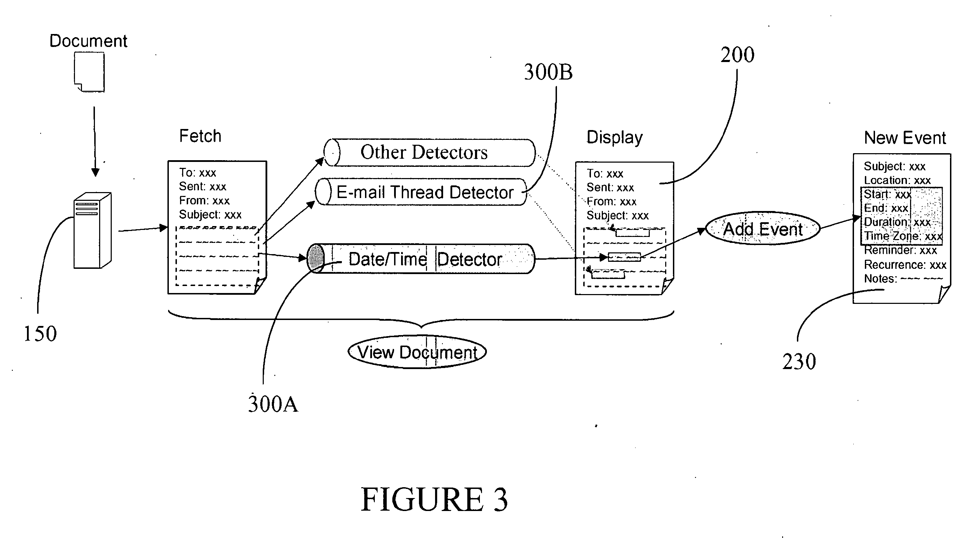

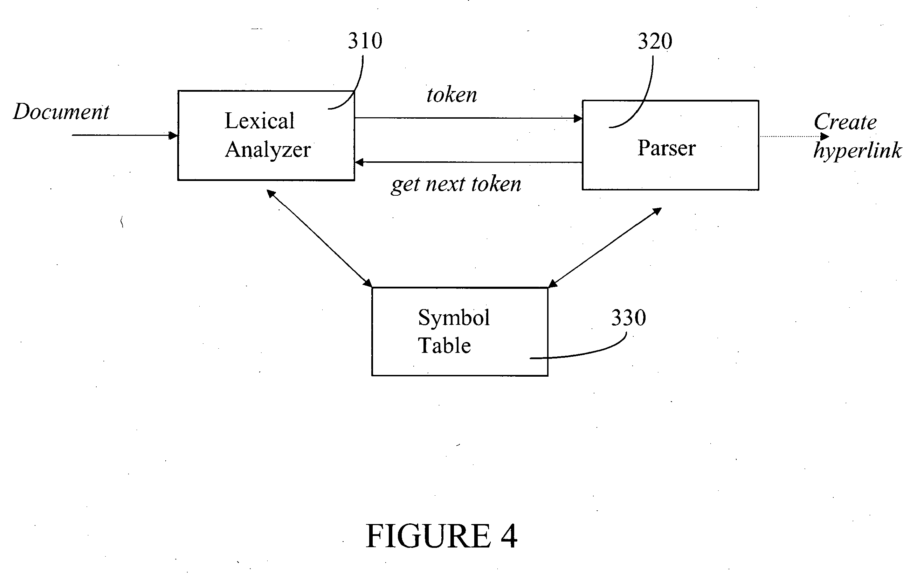

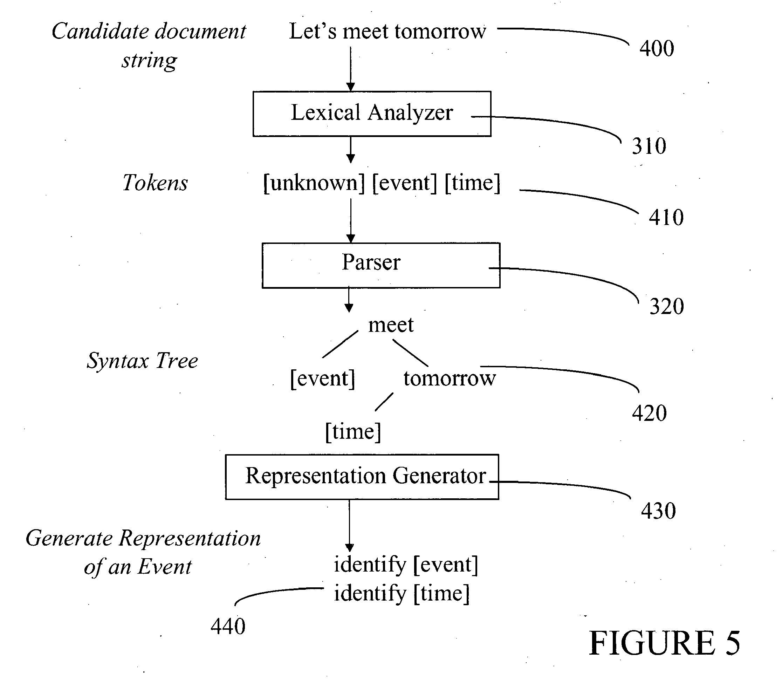

A more difficult scenario arises if relative terms are used to describe the preferred time and date in document 200. Relative dates can be in formats listed above with missing information, or they can be expressed in words such as: Today; Tomorrow; and Yesterday. Time of day relative expressions include Morning, Noon, Afternoon, Evening, Night. Holidays (e.g. Christmas, New Year's, Thanksgiving, Easter, Valentine's Day, etc.) must also be accommodated. In the present embodiment, a date/time detector module (see Figure 3) correlates generic words relating to time and date, to a specific calendar entry (i.e. date and time). The date/time detector module is essentially comprised of a sophisticated lexical analyzer communicating with a parser and symbol table (all of which are discussed below in relation to Figures 4 and 5). It should be appreciated that the preferred date and time resolution is to the minute (i.e. year, month, week, day, hour and minute), since such resolution is often required for a complete calendar event or task entry.

Critical to the resolution of a relative term is the determination of a reference date. A reference date is selected to infer any missing components of an incomplete or relative date/time. Examples of a Reference Date include (but are not limited to): Sent date of an email; Received date of an email; or Current date. The present embodiment uses a reference date inference rule (RDIR) to handle incomplete or relative terms used in document 200. Given a reference date and an incomplete (or relative date), an absolute date is inferred using the RDIR. The inference rule will determine how to apply the relative date to the reference date.
Example:
- Relative date happens in a future day/month/year
- Relative date happens in the current day/month/year
- Relative date happens in a past day/month/year
- Relative date happens at a fixed point in time.

For example, if the relative term "tomorrow" is indicated in the email, this term is compared to the Sent date of the email and the day following that date is deemed to be the date to be entered into the calendar event/ task. Incomplete or missing information in the date contained in the email can also be inferred. For instance, "Sept 27^{th}" is inferred to be within the same year as the message was sent unless the inferred meeting date would fall before the current date, in which case the assumption would be that the meeting will occur in the future (i.e. the next year) rather than the present year (e.g. if an email is sent on December 30^{th} for a meeting on January 5^{th}, the reference date inference rule would deem the meeting to be in the next year). It should be appreciated that the RDIR may change to suit the application or situation. It should also be appreciated that when a user selects a hyperlinked relative date/time entry, a display subset of absolute dates in order of probability is generated. The user's selection is entered as the default for future occurrences of the relative term.

Recurring calendar entries can also be inferred if a range of dates is detected. In order to handle situations where ambiguity arises, a default convention is established. For example, the statement "Monday to Friday" could be considered a single event with a duration of days, or five separate events occurring daily starting Monday and ending Friday. In such cases a default can be defined which may be modified as more information becomes available. For instance "Monday-Friday" could default to specifying a 5 day duration but "9:00am Monday-Friday" would indicate 5 separate events occurring at 9:00AM each day. Plural use of months and/or days of the week also indicate recurrence (e.g. Fridays). Recurrence is also specified using such expressions as "every Friday".

The example as previously described focuses on detecting date/time information in a document and providing a hyperlink for the detected date/time. If the hyperlink is selected an application could be started in which a new event based on the hyperlinked date/time can be created. An event could also be triggered based on the detection of a pattern within a communication thread. As those in the art will appreciate, a thread can be comprised of a series of messages regarding the same subject. The term thread is generally applied to email messages, "an email thread", but is applicable to other types of message. Generally, the message which started the thread is followed chronologically by message responses from other recipients, thereby allowing the other recipients to follow the entire virtual conversation. In an alternate embodiment, a predefined trigger will be monitored to determine if action needs to be taken. An exemplary trigger could be the number of responses in a message thread. If the number of responses exceeds a defined threshold, the trigger will fire and the user will be presented with the option to create an event by, for example, invoking a menu selection or selecting an option in a dialog box. If the user chooses to create an event, the appropriate application (calendar application or tasks application for example) is invoked and the information in the email such as subject and attendees is mapped to the specified fields in the newly created event. With respect to the date of the event, a default date (i.e. the day following the date of the last entry in the email thread) is inserted into the event and manually changed if it is not suitable. As will be appreciated by those in the art, instead of using a threshold based on the number of responses in the email thread, other characteristics may be used. For example, the span of time that the email thread has been active could be analyzed and if it exceeds a defined period of time, the user will be prompted to create an event. Another threshold could be based on the number of people which have been added/removed from the "TO" and "CC" list i.e. if the number added exceeds a defined threshold the creation of an event will be prompted. Similar to the first embodiment discussed above, a thread detector module is used to locate an email thread and the information which will be assessed against the defined threshold.

Referring to Figure 3, the system configuration used to filter a document in either embodiment is depicted. This document could be an email for example. Document 200 is stored in a memory device 150, such as a mailbox, which could include a memory device associated with the server of an Internet service provider (ISP) or the server in a local area network (LAN) or a mailbox database on a handheld wireless device or any other memory device associated with a computing device, such as a personal computer. When document 200 is requested by, a user for example, a fetch command removes document 200 from memory device 150 and forwards it to a date/time or thread detector module (300A, 300B). The date/time or thread detector module scans document 200 using a lexical analyzer 310 cooperating with a parser 320 and a symbol table 330 (see Figure 4) and identifies all date/time/thread related information. In the case of date/time expressions, a hyperlink can be used in document 200 for each expression identified. The user could select the hyperlink, creating, as discussed above, a new event. In the case of a detected email thread, the user is prompted to create a new event. As understood by those in the art, date/time and thread detector module are shown in Figure 3 as separate entities although the combined functionality may be contained in a single entity.

Referring to Figure 4, the purpose of lexical analyzer 310 is to take a stream of input characters and decode them into higher level tokens that a parser can understand. Parser 320 takes the output of the lexical analyzer and operates by analyzing the sequence of tokens returned. Data structure or symbol table 330 is generally used to store information about source language constructs. This information is collected during an analysis phase and used during a synthesis phase to generate target code. For example, during lexical analysis, the character string, or lexeme, forming an identifier is saved as an entry in symbol table 330. The entry may be later augmented with information such as the type of identifier, its usage (e.g. procedure, variable or label) and its position in storage. During generation of the target code, this information is used to create the proper code to store and access the identifier.

As shown in Figure 5 for example, lexical analyzer (or scanner) 310 uses patterns that match strings in the candidate document string 400 and converts the string to one or more tokens 410. Tokens 410 are representations of the text string and simplify processing. As lexical analyzer 310 finds identifiers in the candidate document string 400, it enters them in symbol table 330. Symbol table 330 may also contain other information such as data type (integer or real) and location of the variable memory. All subsequent references to identifiers refer to the appropriate index of symbol table 330. Parser 320 uses grammar rules that allow it to analyze tokens 410 from lexical analyzer 310 and create a syntax tree 420. Syntax tree 420 imposes a hierarchical structure on tokens 410. For example, operator precedence and associativity are established in syntax tree 420. Representation of an event generator 430 generates a representation of an event 440 from the syntax tree 420. Using representation of an event 440 as an input, a new event can be created using an application, such as a calendar application or tasks application.

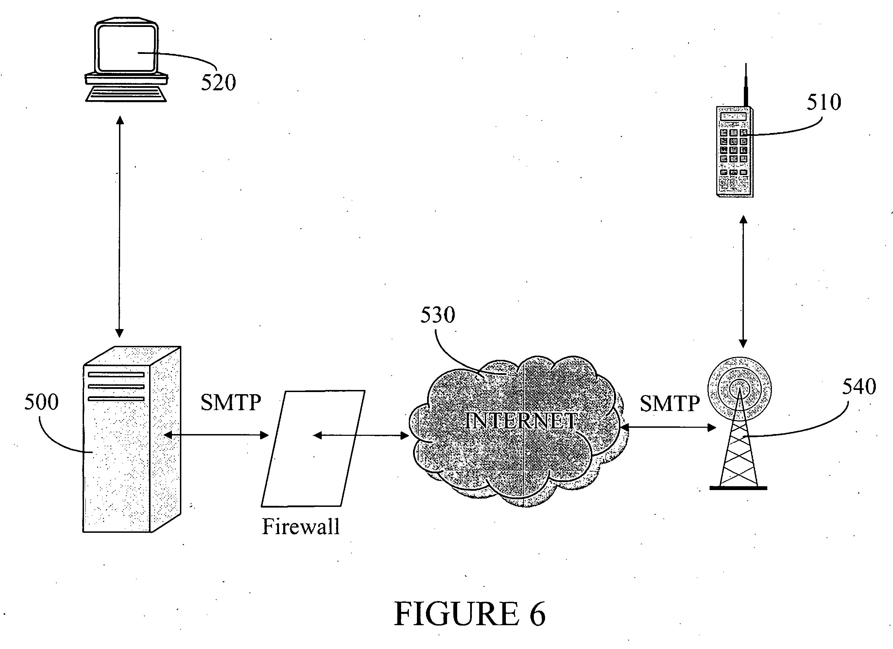

Referring to Figure 6, a wireless network supporting synchronized email is depicted. When an email arrives at mail server 500 for the user of wireless device 510, an email redirector in desktop 520 is notified. Mail server 500 could for example be a Microsoft® Exchange® server of a Lotus® Domino® server or a Novell® Groupwise® server. The email redirector retrieves a copy of the email message, compresses and encrypts it and sends it via the Internet 530 to wireless network 540. The outgoing message is unreadable email that can only be decrypted by wireless device 510. Wireless network 540 then delivers the email message to wireless device 510. At wireless device 510, the message is decrypted and decompressed and the user is notified of its arrival. The path from wireless device 510 to desktop 520 follows the same steps, except in reverse. When an email message is composed on wireless device 510, it is compressed, encrypted and sent back to the user's desktop 520 over wireless network 540 and Internet 530. Once retrieved from mail server 500, the redirector in desktop 520 decrypts and decompresses the email message and places it in the Outbox associated with an email application running on desktop 520 (e.g. Microsoft® Office Outlook®). The result of the above email transmission and reception process is that there is no difference between the email message that is sent from wireless device 510 and a message that is sent from desktop 520 - they both appear to originate from the user's corporate email address and a copy is placed in the user's Sent folder associated with Outlook. In addition to the above, when a lengthy email arrives in the user's corporate inbox, only the first two kilobytes of the message body is initially sent to wireless device 510. If an attachment is sent in the email, only the file name and attachment are sent. If the user wishes to read more of the message, the user, using wireless device 510, can request the next two kilobytes to be sent from mail server 500.

In accordance with the present application, a method can be triggered based on the detection of date/time information or an email thread matching specified parameters. If the user (at wireless device 510 or desktop 520) chooses to create a new event based on the triggered method, an application could be invoked and the information in the email such as subject and attendees could be mapped to the specified fields in the newly created event. Additionally, the body of the email could be copied into the Event Notes section of the calendar event. In accordance with another aspect of the present application, if a calendar event is created by a user (at wireless device 510 or desktop 520) based on the detection of date/time information or an email thread, a link to the email thread could be included in the Event Notes section of the event when the event is created. The link could be, for example, a reference identification (ID) of the email stored in mail server 500. The reference ID could for example be a MIME reference ID. By including the reference ID in the notes section, the message's content itself does not need to be sent over the air to wireless device 501. If the wireless device 501 does not already have the message, a request for the message's content could be made to mail server 500 if and when necessary. This will save both bandwidth and battery life. The email could be contained in the message list associated with the email application of wireless device 510. When the email is requested by the user, it will be displayed if found in the message list. Otherwise, a request will be sent to mail server 500 to retrieve the message. The request places the email in the message list and not in the notes section of the calendar event. This ensures that only one copy of the email is physically resident on wireless device 510 instead of a copy appearing in both the event and the message list.

Although the use of date/time information to generate a new calendar event or task have been the only exemplary embodiments of the present application which have been disclosed, it should be apparent to those skilled in the art that the generation of a new calendar event or task are only representative of the kind of applications for which the mined date/time information could be useful. For example, one such additional application for which date/time information could be relevant includes a billing application. In this case, a recipient may wish to log their time in relation to work performed for a particular client. Through an additional menu selection, the date/time information received in document 200 could be logged into a billing application which would ultimately generate an invoice for the client. Such alternate uses of the mined date/time information are meant to be included within the scope of the present application. Further, as an alternate to a received email, date/time information may be mined from a web page and a hyperlink created from which a new event can be created. Still further, those skilled in the art will appreciate that the method an apparatus which have been described could be interchangeably used in a terrestrial or wireless network supporting, in particular, email and browser functions.

A person understanding this application may now conceive of further alternative embodiments or variations of the above all of which are intended to fall within the scope of the present application as defined in the claims that follow.

## Claims

1. A method of creating a new event in a network communications system, the method comprising:
analyzing a document in said network communications system, said analyzing comprising identifying date and time entries in said document;
based on the identified date and time entries in said document, generating a hyperlink for each of said identified date and time entries to open an application capable of creating an event, said identified date and time entries being provided to the application, wherein the event can be generated in the application directly from the document;
displaying the hyperlink;
automatically providing a user prompt related to said event in response to selection of the hyperlink; and
in response to a user interaction with said user prompt opening the application and creating the event based on the hyperlinked date and time.

2. The method of claim 1 wherein said step of analyzing comprises searching in a lookup table to identify a first type of date and time entries, and wherein said first type of date and time entries comprise a complete date and time format.

3. The method of claim 1 or claim 2 wherein said step of analyzing comprises processing said document in a lexical analyzer and a parser to identify a second type of date and time entries wherein said second type of date and time entries comprises an incomplete data and time format or a relative date and time expression.

4. The method of claim 3 when dependent from claim 2 comprising:
generating a hyperlink for each of said identified first type of date and time entries and each of said identified second type of date time entries;
upon selection of said hyperlink by a user, presenting the user a choice of event type to be created;
upon selection of said choice of event type by the user, mapping specified fields in said document to specified fields in said new event.

5. The method of claim 4 wherein said specified fields in said document comprise subject, to, from and/or body.

6. The method of claim 5 wherein said specified fields in said new event comprise subject, attendees and/or event notes.

7. The method of any one of claims 1 to 6 in which the analyzing additionally includes detecting threads and the method includes determining if a defined threshold has been exceeded in respect of said thread: and if said defined threshold has been exceeded, prompting a user to create said new event.

8. The method of claim 7 wherein said document is an email message, and wherein said step of analyzing comprises identifying a thread in said email message.

9. The method of claim 8 wherein said step of creating comprises:
determining if said defined threshold contained in said thread has been exceeded; and
if said defined threshold has been exceeded, prompting a user to create said new event.

10. The method of claim 9 wherein said prompting comprises presenting a user with a menu and, upon selection of an entry in said menu by said user, mapping specified fields in said message to specified fields in said new event.

11. The method of claim 9 or claim 10 wherein said defined threshold is a number of responses received in said thread or a length of time that said thread has been active.

12. The method of any one of claims 1 to 11 wherein said document comprises an email message, a peer-to-peer personal identification number (PIN) message, short message service (SMS) message, multimedia messaging service (MMS) message, an Instant Message, web page or word processing document.

13. The method of any one of claims 1 to 12 wherein said new event comprises a calendar event or a task.

14. The method of any one of claims 1 to 13 wherein said network communications system is a wireless network, and wherein said method is carried out in a server communicating to said wireless network.

15. The method of any one of claims 1 to 13 wherein said network communications system is a wireless network, and wherein said method is carried out in a wireless device.

16. A computer program product for creating a new event for use in a network communications system, the computer program product comprising a computer readable medium embodying code means executable by a computer device, system or apparatus for implementing the method of any one of claims 1 to 15.

## Patentansprüche

1. Ein Verfahren zum Erstellen eines neuen Ereignisses in einem Netzwerkkommunikationssystem, wobei das Verfahren aufweist:
Analysieren eines Dokuments in dem Netzwerkkommunikationssystem, wobei das Analysieren ein Identifizieren von Datum- und Uhrzeit-Einträgen in dem Dokument aufweist;
Erzeugen, basierend auf den identifizierten Datum- und Uhrzeit-Einträgen in dem Dokument, eines Hyperlinks für jeden der identifizierten Datum- und Uhrzeit-Einträge, um eine Anwendung zu öffnen, die ein Ereignis erstellen kann, wobei die identifizierten Datum- und Uhrzeit-Einträge für die Anwendung vorgesehen werden, wobei das Ereignis in der Anwendung direkt aus dem Dokument erzeugt werden kann;
Anzeigen des Hyperlinks;
automatisches Vorsehen einer Benutzeraufforderung in Bezug auf das Ereignis in Reaktion auf eine Auswahl des Hyperlinks; und
in Reaktion auf eine Benutzerinteraktion mit der Benutzeraufforderung, Öffnen der Anwendung und Erstellen des Ereignisses basierend auf dem/der mit einem Hyperlink versehenen Datum und Uhrzeit.

2. Das Verfahren gemäß Anspruch 1, wobei der Schritt des Analysierens ein Suchen in einer Verweistabelle aufweist, um einen ersten Typ von Datum- und Uhrzeit-Einträgen zu identifizieren, und wobei der erste Typ von Datum- und Uhrzeit-Einträgen ein vollständiges Datum- und Uhrzeit-Format aufweist.

3. Das Verfahren gemäß Anspruch 1 oder Anspruch 2, wobei der Schritt des Analysierens ein Verarbeiten des Dokuments in einem lexikalischen Analysator und einem Parser aufweist, um einen zweiten Typ von Datum- und Uhrzeit-Einträgen zu identifizieren, wobei der zweite Typ von Datum- und Uhrzeit-Einträgen ein unvollständiges Datum- und Uhrzeit-Format oder einen relativen Datum- und Uhrzeit-Ausdruck aufweist.

4. Das Verfahren gemäß Anspruch 3, wenn abhängig von Anspruch 2, das aufweist:
Erzeugen eines Hyperlinks für jeden des identifizierten ersten Typs von Datum- und Uhrzeit-Einträgen und jeden des identifizierten zweiten Typs von Datum-Uhrzeit-Einträgen;
bei Auswahl des Hyperlinks durch einen Benutzer, Präsentieren dem Benutzer einer Auswahl eines zu erstellenden Ereignistyps;
bei Auswahl der Auswahl des Ereignistyps durch den Benutzer, Zuordnen von spezifizierten Feldern in dem Dokument zu spezifizierten Feldern in dem neuen Ereignis.

5. Das Verfahren gemäß Anspruch 4, wobei die spezifizierten Felder in dem Dokument Betreff, An, Von und /oder Hauptteil aufweisen.

6. Das Verfahren gemäß Anspruch 5, wobei die spezifizierten Felder in dem neuen Ereignis Betreff, Teilnehmer und /oder Ereignisanmerkungen aufweisen.

7. Das Verfahren gemäß einem der Ansprüche 1 bis 6, wobei das Analysieren zusätzlich ein Erfassen von Threads umfasst und das Verfahren ein Bestimmen umfasst, ob eine definierte Schwelle in Bezug auf den Thread überschritten wurde; und wenn die definierte Schwelle überschritten wurde, Auffordern eines Benutzers, das neue Ereignis zu erstellen.

8. Das Verfahren gemäß Anspruch 7, wobei das Dokument eine Email-Nachricht ist und wobei der Schritt des Analysierens ein Identifizieren eines Threads in der Email-Nachricht aufweist.

9. Das Verfahren gemäß Anspruch 8, wobei der Schritt des Erstellens aufweist:
Bestimmen, ob die in dem Thread enthalte definierte Schwelle überschritten wurde; und
wenn die definierte Schwelle überschritten wurde, Auffordern eines Benutzers, das neue Ereignis zu erstellen.

10. Das Verfahren gemäß Anspruch 9, wobei das Auffordern aufweist ein Präsentieren eines Menüs für einen Benutzer und, bei Auswahl eines Eintrags in dem Menü durch den Benutzer, Zuordnen von spezifizierten Feldern in der Nachricht zu spezifizierten Feldern in dem neuen Ereignis.

11. Das Verfahren gemäß Anspruch 9 oder Anspruch 10, wobei die definierte Schwelle eine Anzahl von Antworten ist, die in dem Thread empfangen wurde, oder eine Zeitdauer, während der der Thread aktiv war.

12. Das Verfahren gemäß einem der Ansprüche 1 bis 11, wobei das Dokument eine Email-Nachricht, eine Peer-zu-Peer-"persönliche Identifikationsnummer (PIN - personal identification number)"-Nachricht, eine SMS(Short Message Service)-Nachricht, eine MMS(Multimedia Messaging Service)-Nachricht, eine Instant-Nachricht, eine Webseite oder ein Textverarbeitungsdokument aufweist.

13. Das Verfahren gemäß einem der Ansprüche 1 bis 12, wobei das neue Ereignis ein Kalenderereignis oder eine Aufgabe aufweist.

14. Das Verfahren gemäß einem der Ansprüche 1 bis 13, wobei das Netzwerkkommunikationssystem ein drahtloses Netzwerk ist, und wobei das Verfahren in einem Server ausgeführt wird, der mit dem drahtlosen Netzwerk kommuniziert.

15. Das Verfahren gemäß einem der Ansprüche 1 bis 13, wobei das Netzwerkkommunikationssystem ein drahtloses Netzwerk ist, und wobei das Verfahren in einer drahtlosen Vorrichtung ausgeführt wird.

16. Ein Computerprogrammprodukt zum Erstellen eines neuen Ereignisses zur Verwendung in einem Netzwerkkommunikationssystem, wobei das Computerprogrammprodukt ein computerlesbares Medium mit Codemitteln aufweist, die durch eine Computervorrichtung, ein System oder eine Vorrichtung ausführbar sind zum Implementieren des Verfahrens gemäß einem der Ansprüche 1 bis 15.

## Revendications

1. Procédé de création d'un nouvel événement dans un système de communications réseau, le procédé comprenant le fait :
d'analyser un document dans ledit système de communications réseau, ladite analyse comprenant le fait d'identifier des entrées de date et d'heure dans ledit document ;
de générer, sur la base des entrées de date et d'heure identifiées dans ledit document, un lien hypertexte pour chacune desdites entrées de date et d'heure identifiées pour ouvrir une application capable de créer un événement, lesdites entrées de date et d'heure identifiées étant fournies à l'application, où l'événement peut être généré dans l'application directement à partir du document ;
d'afficher le lien hypertexte ;
de fournir automatiquement une invite d'utilisateur liée audit événement en réponse à la sélection du lien hypertexte ; et
d'ouvrir l'application et de créer l'événement sur la base de la date et de l'heure hyperliées, en réponse à une interaction d'utilisateur avec ladite invite d'utilisateur.

2. Procédé de la revendication 1, dans lequel ladite étape d'analyse comprend la recherche dans une table de conversion pour identifier un premier type d'entrées de date et d'heure, et où ledit premier type d'entrées de date et d'heure comprend un format de date et d'heure complet.

3. Procédé de la revendication 1 ou 2, dans lequel ladite étape d'analyse comprend le fait de traiter ledit document dans un analyseur lexical et un analyseur syntaxique pour identifier un deuxième type d'entrées de date et d'heure où ledit deuxième type d'entrées de date et d'heure comprend un format de date et d'heure incomplet et une expression de date et d'heure relative.

4. Procédé de la revendication 3 lorsqu'elle dépend de la revendication 2, comprenant le fait :
de générer un lien hypertexte pour chacune dudit premier type identifié d'entrées de date et d'heure et chacune dudit deuxième type identifié d'entrées de date et d'heure ;
de présenter à l'utilisateur un choix de type d'événement à créer, lors de la sélection dudit lien hypertexte par un utilisateur ;
de mettre en correspondance des champs spécifiés dans ledit document avec des champs spécifiés dans ledit nouvel événement, lors de la sélection dudit choix de type d'événement par l'utilisateur.

5. Procédé de la revendication 4, dans lequel lesdits champs spécifiés dans ledit document comprennent des champs objet, à, de et/ou corps.

6. Procédé de la revendication 5, dans lequel lesdits champs spécifiés dans ledit nouvel événement comprennent des champs objet, participants et/ou notes d'événement.

7. Procédé de l'une quelconque des revendications 1 à 6, dans lequel l'analyse comporte en outre le fait de détecter des fils et le procédé comporte le fait de déterminer si un seuil défini a été dépassé par rapport audit fil : et d'inviter un utilisateur à créer ledit nouvel événement, si ledit seuil défini a été dépassé.

8. Procédé de la revendication 7, dans lequel ledit document est un message électronique, et où ladite étape d'analyse comprend le fait d'identifier un fil dans ledit message électronique.

9. Procédé de la revendication 8, dans lequel ladite étape de création comprend le fait :
de déterminer si ledit seuil défini contenu dans ledit fil a été dépassé ; et
d'inviter un utilisateur à créer ledit nouvel événement, si ledit seuil défini a été dépassé.

10. Procédé de la revendication 9, dans lequel ladite invitation comprend le fait de présenter un menu à un utilisateur et de mettre en correspondance des champs spécifiés dans ledit message avec des champs spécifiés dans ledit nouvel événement lors de la sélection d'une entrée dans ledit menu par ledit utilisateur.

11. Procédé de la revendication 9 ou 10, dans lequel ledit seuil défini est un nombre de réponses reçues dans ledit fil ou une durée pendant laquelle ledit fil a été actif.

12. Procédé de l'une quelconque des revendications 1 à 11, dans lequel ledit document comprend un message électronique, un message de numéro d'identification personnel (PIN) poste à poste, un message de service de messages courts (SMS), un message de service de messages multimédias (MMS), un message instantané, une page Web ou un document de traitement de texte.

13. Procédé de l'une quelconque des revendications 1 à 12, dans lequel ledit nouvel événement comprend un événement de calendrier ou une tâche.

14. Procédé de l'une quelconque des revendications 1 à 13, dans lequel ledit système de communications réseau est un réseau sans fil, et où ledit procédé est effectué dans un serveur communiquant avec ledit réseau sans fil.

15. Procédé de l'une quelconque des revendications 1 à 13, dans lequel ledit système de communications réseau est un réseau sans fil, et où ledit procédé est effectué dans un dispositif sans fil.

16. Produit de programme informatique destiné à créer un nouvel événement pour une utilisation dans un système de communications réseau, le produit de programme informatique comprenant un support lisible par ordinateur incorporant un moyen de code exécutable par un dispositif, un système ou un appareil informatique pour mettre en oeuvre le procédé de l'une quelconque des revendications 1 à 5.
